# EUROPÄISCHE PATENTSCHRIFT

(11) **EP 1 313 657 B1**
(45) Veröffentlichungstag und Bekanntmachung des Hinweises auf die Patenterteilung: **26.05.2004**
(21) Anmeldenummer: 01960026.1
(22) Anmeldetag: 17.08.2001
(51) Int. Cl.: B65G 53/52, B65G 53/66

(54) **VERFAHREN UND ANLAGE ZUM FÖRDERN VON REIS**
METHOD AND UNIT FOR THE TRANSPORT OF RICE
PROCEDE ET INSTALLATION POUR TRANSPORTER DU RIZ

(30) Priorität: 28.08.2000 DE 10042135
(43) Veröffentlichungstag der Anmeldung: 28.05.2003
(73) Patentinhaber: Bühler AG, 9240 Uzwil (CH)
(72) Erfinder: TANAKA, Toshiaki, Kanagawa 234-0056 (JP); OEDING, Jens, D-38302 Wolfenbüttel (DE)
(74) Vertreter: Frommhold, Joachim, Dr.
(86) Internationale Anmeldenummer: PCT/CH2001/000504
(87) Internationale Veröffentlichungsnummer: WO 2002/018245

(56) Entgegenhaltungen:
- WO-A-97/45351
- DE-B- 1 117 041
- US-A- 4 357 864

## Beschreibung

Die Erfindung betrifft Verfahren und eine Anlage zum Fördern von Reis, insbesondere zur pneumatischen Förderung von Reis in Reismühlen.

Die pneumatische Förderung von Getreide in Silos und Getreidemühlen ist hinlänglich bekannt. Trockene und in grossen Mengen anfallende korn- und pulverförmige Schüttgüter können vorteilhaft pneumatisch gefördert werden. Bei Getreide ergeben sich zusätzlich gute Sanitationsbedingungen.

Die DE-U-8717367 offenbart eine Förderleitung für Schüttguttransport, weiche ins Rohrinnere gerichtete Vorsprünge von weniger als 1 mm Höhe aufweist, um die Entstehung von Engelhaar zu vermeiden. Bei ähnlichen Lösungen, wie zum Beispiel der DE-OS 2008989 soll die Entstehung von Wandansätzen verhindert werden.

Die DE-OS 3026001 zeigt eine Reismühle mit pneumatischen Reiskornfördereinrichtungen und pneumatischen Sichtereinrichtungen, wobei in letzteren das Gut verlangsamt und abgerieben wird. Einstellbare Platteneinrichtungen mit gekrümmten Platten sind hierbei mit einem Abriebbelag versehen. Diese können in Kaskaden angeordnet sein, um Luft von den Reiskömern abzuscheiden. Die durch die Krümmung bewirkte Verlangsamung soll den Bruch mitgeführter Reiskörner verhindern oder minimieren. Dies bei jeder Behandlungsstufe.

Die US-A-4 357 864 offenbart eine Anlange zum Fördern von Reis, die alle Merkmale des Oberbegriffs des Anspruchs 4 aufweist.

Die pneumatischen Sichter- und Fördereinrichtungen sind für Haupt- und Nebenprodukte vorgesehen, die bis anhin vermutete Bruchgefahr der Reiskörner durch pneumatischen Transport sollte durch das vermeiden des Auftreffens der Reiskörner auf harte Metalloberflächen beseitigt werden. Durch die Verstellbarkeit der gekrümmten Platten kann auch die Dicke des Komstroms geändert werden.

Der Erfindung liegt nun die Aufgabe zugrunde, ein Verfahren zum Fördern von Reis, insbesondere zur pneumatischen Förderung zu schaffen, mit der die Reisförderung selbst sicherer und einfacher ausgeführt werden kann. Die Aufgabe ist an Hand der kennzeichnenden Merkmale des Patentanspruchs gelöst, vorteilhafte Ausgestaltungen sind in den Unteransprüchen wiedergegeben.

Der Erfindung liegt weiterhin die Aufgabe zugrunde, eine Anlage zur Förderung von Reis, insbesondere zur pneumatischen Förderung zu entwickeln.

Der Erfindung liegt die Erkenntnis zugrunde, dass durch eine Anpassung bzw. Optimierung der Fördergeschwindigkeit in den Rohrleitungen die Bruchgefahr weiter reduziert werden kann.

Bevorzugt sind Stosskanten zu vermeiden und Rohre innen zu polieren. Mittels konischer Rohrabschnitte ist die Fördergeschwindigkeit an geeigneten Stellen zu reduzieren. Auch sind Feuchte und Temperatur der Förderluft zu regeln bzw. wenigstens zu kontrollieren.

Das Fördermedium ist im Normalfall Luft, doch kann auch ein Inertgas oder dergleichen Anwendung finden, um zum Beispiel das Reis-Aroma (z. B. bei japanischem Weissreis) zu schützen oder um eine Reduktion des Oberflächenkeimgehalts zu bewirken. Ebenso ist es möglich, das Fördermedium, insbesondere Luft zu filtern.

Um Kornbruch zu vermeiden, kann die Einspeisung des Produkts in den Gasstrom mit spezifischen Speisevorrichtungen, wie zum Beispiel Schleusen erfolgen.

Die Erfindung wird nachfolgend in einem Ausführungsbeispiel näher beschrieben.

In einer Reismühle, deren Produkttransport vollständig pneumatisch erfolgt werden die Temperatur und die Feuchte der Förderluft in relevanten Abschnitten der Förderstränge mittels Sensoren, die im Bereich der Innenwand der Förderrohre angeordnet sind, ermittelt. Die Ist-Daten werden an eine übliche Steuereinheit weitergeleitet, mit vorgegebenen Sollwerten verglichen und nachfolgend in Richtung Sollwerte geregelt. Dies kann ein Kühlen oder Erwärmen von Förderluft bzw. ein Aufleuchten oder Entfeuchten der Förderluft (auch des Fördergutes) beinhalten.

Die Förderstränge und die Stutzen zu oder von einzelnen Maschinen und Behandlungseinrichtungen sind so ausgelegt, dass durch stossfreie Übergänge eine ungestörte Förderung des Reises erfolgt. Ergänzend wird in erforderlichen Bereichen die Fördergeschwindigkeit des Reises durch konische Übergänge optimiert, d. h. je nach Einbaurichtung erhöht oder reduziert.

## Patentansprüche

1. Verfahren zum Fördern von Reis, insbesondere mittels durchgängiger pneumatische Förderung von Reis in einer Reismühle, **dadurch gekennzeichnet, dass** die Temperatur und die Feuchte der Förderluft im Förderstrang gemessen wird, diese Istwerte mit vorgegebenen Sollwerten verglichen werden und nachfolgend in Richtung des Sollwertes geregelt bzw. eingestellt werden.

2. Verfahren nach Anspruch 1 **dadurch gekennzeichnet, dass** die Fördergeschwindigkeit im Förderstrang durch konische Übergänge optimiert wird.

3. Verfahren nach einem der Ansprüche 1 oder 2, **dadurch gekennzeichnet, dass** der Förderstrom gleichmässig und ungehindert ist.

4. Anlage zum Fördern von Reis, insbesondere zur durchgehenden pneumatischen Förderung von Reis in einer Reismühle mit Fördersträngen zwischen den einzelnen Behandlungseinrichtungen, **dadurch gekennzeichnet, dass** im Förderstrang Sensoren zur Messung der Feuchte sowie der Temperatur vorgesehen sind und dass die Förderelemente bzw. Förderstränge sowie Stutzen zu Behandlungseinrichtungen innen poliert sind.

5. Anlage nach Anspruch 4, **dadurch gekennzeichnet, dass** die Sensoren über Steuereinheiten mit Regelvorrichtungen für Temperatur und Feuchte der Förderluft verbunden sind.

6. Anlage nach einem der Ansprüche 4, **dadurch gekennzeichnet, dass** mindestens ein Förderrohr innen konisch ausgebildet ist.

7. Anlage nach einem der Ansprüche 4 oder 6, **dadurch gekennzeichnet, dass** die Förderrohre und/oder Stutzen innen stosskantenfrei miteinander verbunden sind.

## Claims

1. A method for conveying rice, in particular via the continuous pneumatic conveyance of rice in a rice mill, **characterized in that** the temperature and humidity of the conveying air in the conveying sequence is measured, these actual values are compared with prescribed setpoint values, and then adjusted or set to reflect the setpoint value.

2. The method according to claim 1, **characterized in that** the conveying speed in the conveying sequence is optimized via conical transitions.

3. The method according to one of claims 1 or 2, **characterized in that** the conveying stream is uniform and unimpeded.

4. A system for conveying rice, for continuously and pneumatically conveying rice in a rice mill with conveying sequences between the individual processing devices, **characterized in that** the conveying sequence has sensors for measuring the humidity and temperature, and that the conveying elements or conveying sequences as well as connection pieces to processing devices are polished inside.

5. The system according to claim 4, **characterized in that** the sensors are connected via control units with controllers for conveying air temperature and humidity.

6. The system according to claim 4, **characterized in that** at least one conveying pipe is conical inside.

7. The system according to one of claims 4 or 6, **characterized in that** the conveying pipes and/or connection pipes are internally interconnected without any abutting edges.

## Revendications

1. Procédé pour le transport du riz, notamment par transport pneumatique continu du riz au sein d'un moulin à riz, **caractérisé en ce que** la température et l'humidité de l'air de transport sont mesurés dans le circuit de transport, ces valeurs effectives étant comparées à des valeurs de consigne prédéfinies, puis réglées ou ajustées dans le sens de la valeur de consigne.

2. Procédé selon la revendication 1, **caractérisé en ce que** la vitesse de transport dans le circuit de transport est optimisée par des jonctions coniques.

3. Procédé selon l'une quelconque des revendications 1 ou 2, **caractérisé en ce que** le flux de transport est homogène et sans entrave.

4. Installation pour le transport du riz, notamment pour le transport pneumatique continu du riz dans un moulin à riz, avec des circuits de transport entre les différents dispositifs de traitement, **caractérisée en ce que** des capteurs destinés à mesurer l'humidité et la température sont prévus dans le circuit de transport et **en ce que** les éléments de transport ou les circuits de transport ainsi que des tubulures menant vers les dispositifs de traitement sont polis à l'intérieur.

5. Installation selon la revendication 4, **caractérisée en ce que** les capteurs sont reliés par des unités de commande munies de dispositifs de réglage de la température et de l'humidité de l'air de transport.

6. Installation selon la revendication 4, **caractérisée en ce qu'**au moins un tuyau de transport est conique à l'intérieur.

7. Installation selon l'une quelconque des revendications 4 ou 6, **caractérisé en ce que** les tuyaux de transport et/ou les tubulures sont reliés entre eux à l'intérieur, sans présenter de bords plats.
